# EUROPEAN PATENT APPLICATION

(11) **EP 3 818 822 A1**
(43) Date of publication of application: **12.05.2021**
(21) Application number: 19208919.1
(22) Date of filing: 13.11.2019
(51) Int. Cl.: A01G 9/28, A01G 31/06, A01G 31/00

(54) **A MODULAR STRUCTURE FOR A RAISED BED**

(30) Priority: 08.11.2019 PT 2019115900
(71) Applicant: IHT, LDA, 3130-551 Soure (PT)
(72) Inventor: MARQUES DUARTE, Marco Renato, 3200-001 Lousã (PT)
(74) Representative: do Nascimento Gomes, Rui

(57) **Abstract**

The present invention is enclosed in the area of raised beds. It is therefore an object of the present invention a modular structure (1) for a raised bed characterised in that it comprises at least one lower container (3), at least one upper container (2), and means for supplying water (4) to the at least one upper container, wherein: each upper container is suitable for planting or composting, is perforated (22) and is arranged over a lower container, such that at least one upper container is provided on and covers a top opening (31) of the lower container (3) and thereby a liquid within the at least one upper container drips (5) to such lower container by action of gravity, each lower container is configured to store water, and the means for supplying water are configured to bring water from a lower container on to each upper container. Such structure therefore provides for an autonomous system, which maintains unused water and nutrients, which are transported with the water, within the system.

## Description

### FIELD OF THE INVENTION

The present invention is enclosed in the area of raised beds.

### PRIOR ART

Solutions exist in the art where, such as the case of patent application CA1280613, which discloses a solution for defining a closed area in which area in plants and soil may be provided.

Most solutions in this technical field have focused on constructional details of defining a raised bed, as is the case of patent application US2017215345.

Other more complex solutions exist, as is the case of application EP3277078, although only addressing a more compact format.

All the existing solutions have the issue of being little more than an area in which plants may be provided, and which requires the watering from an external source, by means of sprinklers and a hose. None of such solutions provides for the ability to make the raised bed more autonomous and more self-sufficient, while saving water and nutrients.

The present solution innovatively overcomes such issues.

### SUMMARY OF THE INVENTION

It is therefore an object of the present invention a modular structure for a raised bed characterised in that it comprises at least one lower container, at least one upper container, and means for supplying water to the at least one upper container, wherein:
- each upper container is suitable for planting or composting, is perforated and is arranged over a lower container, such that at least one upper container is provided on and covers a top opening of the lower container and thereby a liquid within the at least one upper container drips to such lower container by action of gravity,
- each lower container is configured to store water, and
- the means for supplying water are configured to bring water from a lower container on to each upper container.

Such structure therefore provides for an autonomous system, which maintains unused water and nutrients, which are transported with the water, within the system.

The structure may be operated in the following way: water is provided in the lower container, then the means for supplying water bring water from the lower container on to each upper container (which may be only one), for example by means of a pump and one or more sprinklers or a drip irrigation setup, and the elements provided in the upper container, such as soil and plants, are watered. The upper containers, when used with soil and plants, may be referred to as plantation boxes, suitable to grow plants.

The soil and the plants absorb the water, and the amount of water that is not absorbed drips on to the lower container, also bringing with it nutrients from the plants and soil, and thereby repeating the above operation. Thus, the structure of the present invention allows to obtain a raised bed with a nearly closed system, in which water and nutrients provided in the system are reused. Alternatively, the process may be initiated with water provided directly over the top container.

Each lower container may be coupled to one or more upper containers, wherein a rim formed by the top opening of the lower container is coupled to a base of the one or more upper containers. Where the structure contains more than one upper containers, one of them may contain organic materials for composting, and slurry resulting from the decomposition of the organic materials drips on to a lower container corresponding to such upper container, thereby mixing with the water therein provided and enriching the watering of the plants with the enriched contents of the slurry. The organic materials may comprise organic waste, such as plant waste.

Moreover, the structure of the present invention may contain a plurality of lower containers, to which one or more upper containers correspond. Such lower containers are interconnected, thereby providing for the mixture of dripped water and nutrients coming from all the upper containers.

Thus, in an embodiment, the structure comprises more than one lower container and more than one upper container, the lower containers being interlinked such that a liquid contained in each of the lower containers is levelled between the whole of the interlinked lower containers, and the means for supplying water being arranged to bring water from one or more of the lower containers on to the upper containers.

In an inventive aspect of the present invention, which refers to the use of the structure of the present invention in any of its embodiments, the structure comprises at least two upper containers, one of the upper containers containing soil and at least one plant and the other upper container containing organic materials for composting, the means for supplying water being arranged to bring water from a lower container which is associated with the upper container containing organic materials for composting. The closed system condition of the structure of the present invention is improved by such use, as the slurry provided by the decomposition of the organic materials, as above explained, mixing with the water of the lower container and enriches the watering of the plants with the enriched contents of the slurry.

### DESCRIPTION OF FIGURES

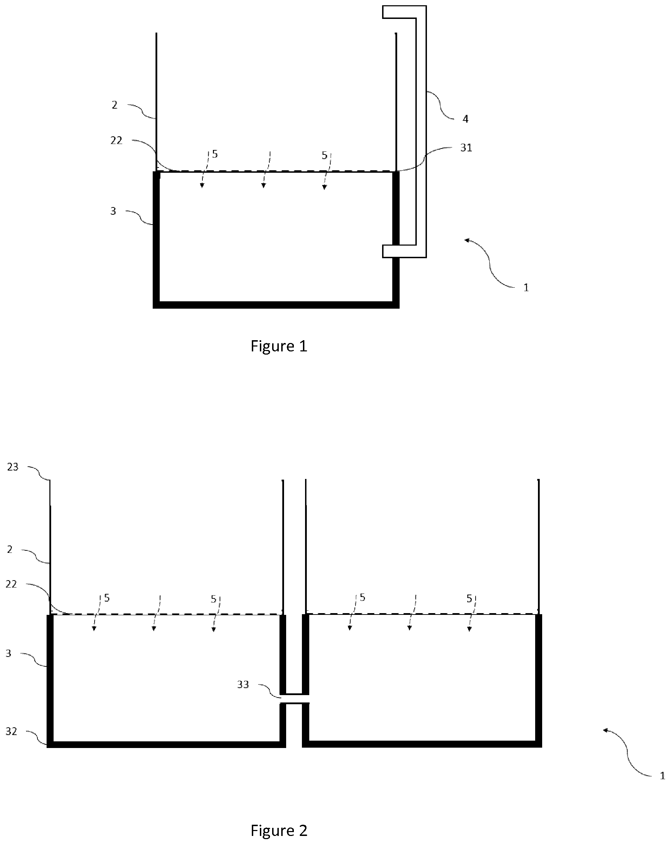

Figure 1 - schematic representation of an embodiment of the structure (1) of the present invention, in a side view. The structure (1) comprises a lower container (3) and a corresponding upper container, the upper container (2) comprising perforations provided in a base, which allows for the dripping of water (5) (or another liquid which drips from the upper container) on to the lower container. Moreover, the lower container (3) has a lower and closed base (32). The upper container (2) is arranged over the lower container, along a top opening of the lower container (31). Thus, a rim formed by the top opening (31) of the lower container (3) is coupled to a base of the one or more upper containers. The structure (1) further comprises means for supplying water (4) configured to bring water from a lower container (3) on to each upper container. Each upper container (2), by being suitable for planting, also comprises a top opening (23).
Figure 2 - schematic representation of another embodiment of the structure (1) of the present invention, in a side view. The structure (1) comprises two lower containers and two corresponding upper containers, the lower containers being interconnected by means of suitable passages (33).

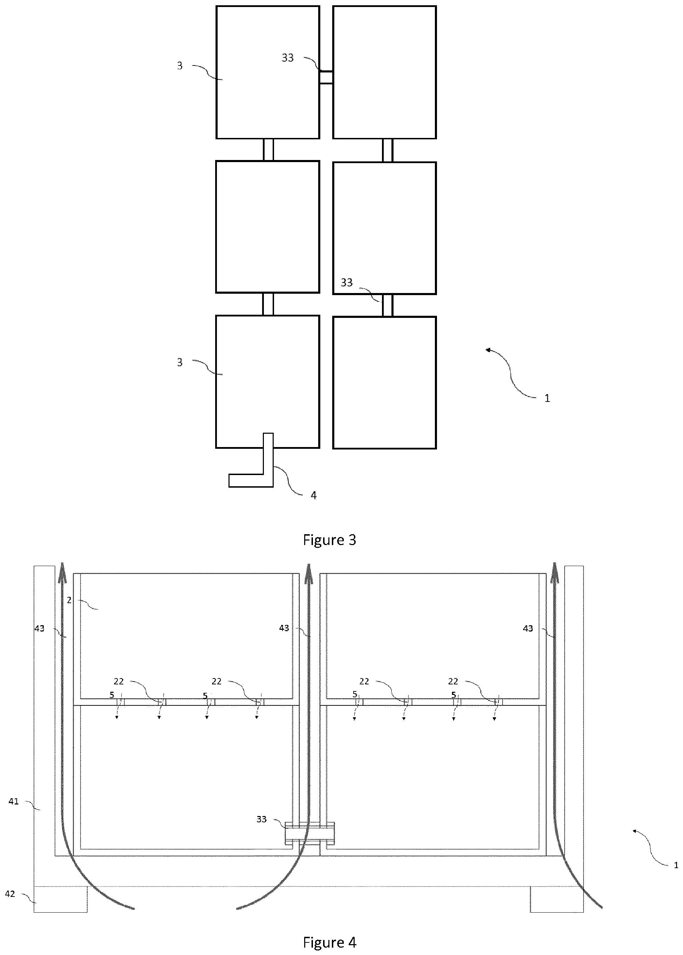

Figure 3 - schematic representation of another embodiment of the structure (1) of the present invention, in a top view, showing only the lower containers and the means for supplying water (4). The structure (1) comprises six interconnected lower containers, wherein four of the lower containers are connected to two other lower containers and the remaining two lower containers are connected to only one other lower container. The means for supplying water (4) are arranged on one of such two remaining two lower containers.
Figure 4 - schematic representation of an embodiment of the structure (1) of the present invention, similar to that of figure 2, in a side view. Such embodiment comprises means for insulation (41) spaced from a lateral section of the upper and lower containers, such that an air space is formed. A predefined frame comprising feet (42) forms a basis for the installation of the means for insulation (41). In addition the upper containers and corresponding lower containers are also spaced from each other such that an air space is formed. The figure therefore represents the flow of air (43) in such spaces, enabling a better maintenance of the ambient conditions within the structure (1), namely the temperature. In addition, the structure (1) may further comprise a level indicator (5), which may consist of a tube arranged vertically and connected to an opening formed in one of the lower containers. The level indicator (5) is therefore such that it provides an indication of the level of water within plurality of lower containers.

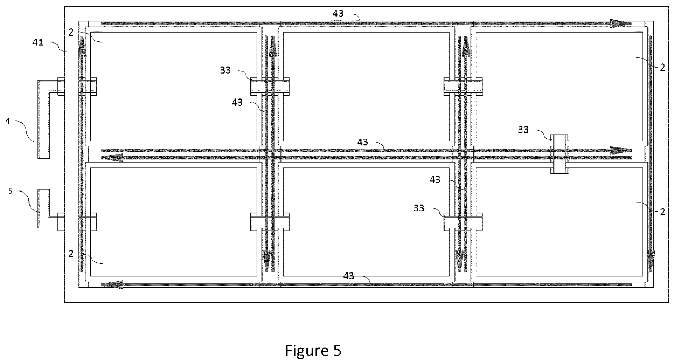

Figure 5 - schematic representation of the same embodiment as of figure 4, in a top view.

### DETAILED DESCRIPTION

The more general and advantageous configurations of the present invention are described in the Summary of the invention. Such configurations are detailed below in accordance with other advantageous and/or preferred embodiments of implementation of the present invention.

In a preferred embodiment of the structure (1) of the present invention, the means for supplying water (4) to the at least one upper container (2) comprise piping and a pump.

In another preferred embodiment of the structure (1) of the present invention, combinable with any above described, it further comprises wherein means for insulation (41) configured to cover at least one lateral section of each upper container (2) and each lower container, wherein such means for insulation (41) are spaced from said at least one lateral section such that an air space is formed, the means for insulation (41) preferably comprising a plurality of panels. It therefore provides for a better maintenance of the ambient conditions within the structure (1), namely the temperature. Especially where each upper container (2) and each lower container (3) is made of a plastic, it is relevant to lower the temperature so that the structure (1) has an operation as closed as possible, particularly avoiding the evaporation of the water provided in each lower container (3) but also in each upper container.

In addition, each two upper containers which are adjacently arranged may also be spaced from each other such that an air space is formed. Correspondingly, each two lower containers which are adjacently arranged may also be spaced from each other such that the same air space is formed. Such therefore also provides for a better maintenance of the ambient conditions within the structure (1), namely the temperature.

These solutions (comprising air spaces / chambers) promote vertical air circulation (due to the fact that the hot air rises), which ensures, i) on the one hand, that the enclosures never reach too high temperatures (due to sun exposure, for example, these temperatures could affect plant roots) and, ii) on the other hand, to help plant ventilation, which minimizes pests and promotes the healthy growth of most species.

In yet another inventive aspect of the structure (1) of the present invention, it further comprises a supporting frame on which each at least one lower container (3) is provided, the supporting frame thereby supporting each lower and upper container, and wherein the supporting frame is such that it provides for the coupling of the plurality of panels, the plurality of panels preferably consisting of decking panels. It enables the preparation of a predefined frame in which the containers are provided, thereby being more stable and enabling a suitable basis for the coupling of the means for insulation (41), particularly where the means for insulation (41) consist of decking panels. In addition, it may further provide a correct levelling of the whole structure (1), which is particularly important where it contains a plurality of interconnected lower containers, the contained water being levelled between them. Preferably for obtaining such objective, the structure (1) may further comprise at least four feet (42) which are able to be coupled to the frame, and which have an adjustable height, thereby allowing for a further levelling of the structure (1).

In an inventive aspect of the present invention, which refers to the use of the structure (1) of the present invention in any of its embodiments, the structure (1) comprises two upper containers and two corresponding lower containers, one of the upper containers containing soil and at least one plant and the other upper container (2) containing organic materials for composting, the means for supplying water (4) being arranged to bring water from a lower container (3) which is associated with the upper container (2) containing organic materials for composting. Alternatively, the structure (1) may comprises three upper containers and two corresponding lower containers, wherein two of the upper containers cover one of the lower containers, two of the three upper containers containing soil and at least one plant and the other upper container (2) containing organic materials for composting, the means for supplying water (4) being arranged to bring water from a lower container (3) which is associated with the upper container (2) containing organic materials for composting. Both consist of compact embodiments - with two groups of upper / lower containers - of the use of the present invention previously described.

In an embodiment of the structure (1) of the present invention, to a lower container (3) correspond at least two upper containers, the at least two upper containers being configured to, together, cover the top opening of such lower container (3) and thereby a liquid within the each upper container (2) dripping to the lower container (3) by action of gravity. It therefore provides that two individual upper containers, each having soil and plants or, as above referred, one of them containing slurry.

In another inventive aspect of the structure (1) of the present invention, the lower container (3) has a top opening with an area which is the same or a multiple of a base of a corresponding at least one top container. Such base defines a bottom face. Where a lower container (3) corresponds to more than one top container, the area of the top opening is a multiple of a base such of more than one top containers.

For instance, the base of two top containers may correspond to the area of the top opening of a lower container. In a particular embodiment, a lower container (3) may have a top opening with an area of 600 x 400 mm and each of two corresponding top containers has base with an area of 400 x 300 mm.

Preferably, the containers have standardized measures. Hence, in a preferred embodiment each lower container (3) and each upper container (2) has a parallelepiped shape wherein, more preferably, each lower container (3) has a top opening with an area of 600 x 400 mm and each top container has bottom face with an area of 600 x 400 mm or 400 x 300 mm.

In another inventive aspect of the structure (1) of the present invention, at least one lower container (3) comprises an escape opening at a predefined height of the lower container (3) configured to avoid the overflow of liquid within such container. Such configuration allows for an external measure of the contained liquid. Such is particularly advantageous in any case, but especially where the structure (1) comprises more than one lower containers, which have a levelled amount of water.

As above referred, in an embodiment, the structure (1) comprises more than one lower container (3) and more than one upper container, the lower containers being interlinked such that a liquid contained in each of the lower containers is levelled between the whole of the interlinked lower containers, and the means for supplying water (4) being arranged to bring water from one or more of the lower containers on to the upper containers. Preferably, for each n lower containers, n-2 are interlinked with two other lower containers and 2 are interlinked with one other lower container, thereby providing a line of interlinked lower containers, as provided in Figure 3. This configuration is particularly advantageous, since it allows for the interconnection of lower containers - which provides levelling between all of them - with a reduced number of interconnections, of no more than two per lower container.

In a preferred embodiment where the structure (1) comprises a plurality of upper and lower containers, the means for supplying water (4) being arranged to bring water from only one of the lower containers on to all the upper containers. Alternatively, the means for supplying water (4) may be arranged to bring water from only one of the lower containers on to all the upper containers but one, which is the upper container (2) containing organic materials for composting. It allows for a more efficient way of watering, from a single source. Due to the interconnection between lower containers, the lower container (3) which operates as source keeps on being supplied. Preferably, the means for supplying water (4) are arranged to bring water from only one of the lower containers which are interlinked with one other lower container, therefore such container being in the end of a line, as provided by the solution above in which n-2 lower containers are interlinked with two other lower containers and 2 are interlinked with one other lower container.

In another embodiment of the structure (1) of the present invention, the means for supplying water (4) further comprise a flexible perforated piping arranged such that it provides for the sprinkling of water to each of the upper containers.

In an embodiment of the structure (1) of the present invention, in particular as regards the operation of the means for supplying water (4), it may be powered by means of a locally installed battery or mains supply.

Where the structure (1) comprises n-2 lower containers which are interlinked with two other lower containers and 2 lower containers interlinked with one other lower container, it may comprise a total of ten containers. In particular, two of such ten containers are interlinked with only one other container. In addition, the remaining eight lower containers are interlinked with two other lower containers, therefore forming a line. One of the containers which is interlinked with only one other container is connected to the means for supplying water (4), which are thereby arranged to bring water from such lower containers on to all the upper containers or all the upper containers but one, which is the upper container (2) containing organic materials for composting.

In an embodiment, where the structure (1) comprises an upper container (2) containing organic materials for composting, such upper container (2) is provided above one of the lower containers which is interlinked with only one other container, thereby enhancing the concentration of slurry provided in such lower container, which will also be connected to the means for supplying water (4).

In yet another embodiment of the structure (1) of the present invention, it further comprises a greenhouse cover, the greenhouse cover being suitable to cover the whole ensemble of upper containers at least partly, preferably entirely. The greenhouse cover preferably has a plurality of lower edges - preferably rectangular - suitable for placing on top of outer edges formed by the ensemble of upper containers of the structure (1) of the present invention. The greenhouse cover is particularly suitable for lower temperature conditions, such as during winter, being able to be placed on top of the upper containers and removable when the air temperature rises.

In an alternative embodiment of the structure (1) of the present invention, it further comprises a net cover, the net cover being suitable to cover the whole ensemble of upper containers at least partly, preferably entirely. The net cover preferably has a plurality of lower edges - preferably rectangular - suitable for placing on top of outer edges formed by the ensemble of upper containers of the structure (1) of the present invention. The net cover is particularly suitable for higher temperature conditions, such as during summer, being able to be placed on top of the upper containers and removable when the air temperature lowers.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A modular structure (1) for a raised bed **characterised in that** it comprises at least one lower container, at least one upper container, and means for supplying water (4) to the at least one upper container, wherein:
- each upper container (2) is suitable for planting or composting, is perforated and is arranged over a lower container, such that at least one upper container (2) is provided on and covers a top opening (31) of the lower container (3) and thereby a liquid within the at least one upper container (2) drips to such lower container (3) by action of gravity,
- each lower container (3) is configured to store water, and
- the means for supplying water (4) are configured to bring water from a lower container (3) on to each upper container.

2. A structure (1) according to the previous claim wherein the means for supplying water (4) to the at least one upper container (2) comprise piping and a pump.

3. A structure (1) according to any of the preceding claims wherein it further comprises means for insulation (41) configured to cover at least one lateral section of each upper container (2) and each lower container, wherein such means for insulation (41) are spaced from said at least one lateral section such that an air space is formed, the means for insulation (41) preferably comprising a plurality of panels.

4. A structure (1) according to the previous claim wherein each upper container (2) and each lower container (3) is made of a plastic.

5. A structure (1) according to any of the preceding claims wherein it further comprises a supporting frame on which each at least one lower container (3) is provided, the supporting frame thereby supporting each lower and upper container, and wherein the supporting frame is such that it provides for the coupling of the plurality of panels, the plurality of panels preferably consisting of decking panels.

6. A structure (1) according to any of the preceding claims wherein to a lower container (3) correspond at least two upper containers, the at least two upper containers being configured to, together, cover the top opening of such lower container (3) and thereby a liquid within the each upper container (2) dripping to the lower container (3) by action of gravity.

7. A structure (1) according to the previous claim wherein the lower container (3) has a top opening with an area which is the same or a multiple of a base of a corresponding at least one top container.

8. A structure (1) according to the previous claim wherein each lower container (3) and each upper container (2) has a parallelepiped shape wherein, preferably, each lower container (3) has a top opening with an area of 600 x 400 mm and each top container has bottom face with an area of 600 x 400 mm or 400 x 300 mm.

9. A structure (1) according to the previous claim wherein at least one lower container (3) comprises an escape opening at a predefined height of the lower container (3) configured to avoid the overflow of liquid within such container.

10. A structure (1) according to any of the preceding claims wherein it comprises more than one lower container (3) and more than one upper container, the lower containers being interlinked such that a liquid contained in each of the lower containers is levelled between the whole of the interlinked lower containers, and the means for supplying water (4) being arranged to bring water from one or more of the lower containers on to the upper containers.

11. A structure (1) according to the previous claim wherein, for each n lower containers, n-2 are interlinked with two other lower containers and 2 are interlinked with one other lower container, thereby providing a line of interlinked lower containers.

12. A structure (1) according to any of the claims 10-11 wherein the means for supplying water (4) are arranged to bring water from only one of the lower containers on to all the upper containers or to all of the upper containers but one, which is the upper container (2) containing organic materials for composting.

13. A structure (1) according to the previous claim wherein the means for supplying water (4) are arranged to bring water from only one of the lower containers which are interlinked with one other lower container.

14. A structure (1) according to any of the claims 10-13 wherein the means for supplying water (4) further comprise a flexible perforated piping arranged such that it provides for the sprinkling of water to each of the upper containers.

15. Use of the structure (1) of any of the preceding claims, wherein the structure (1) comprises at least two upper containers, one of the upper containers containing a soil and a plant and the other upper container (2) containing slurry, the means for supplying water (4) being arranged to bring water from a lower container (3) which is associated with the upper container (2) containing slurry.
